(19) Europäisches Patentamt / European Patent Office / Office européen des brevets

(11) **EP 1 772 701 B1**

(12) **EUROPÄISCHE PATENTSCHRIFT**

(45) Veröffentlichungstag und Bekanntmachung des Hinweises auf die Patenterteilung:
**21.05.2008 Patentblatt 2008/21**

(51) Int Cl.:
*G01B 7/12* *(2006.01)*     *H02G 1/12* *(2006.01)*

(21) Anmeldenummer: **06121331.0**

(22) Anmeldetag: **27.09.2006**

(54) **Einrichtung zur Bestimmung des Leiterdurchmessers eines Kabels**

Device for determining the diameter of the conductor in a cable

Appareil pour mesurer le diamètre de l'âme d'un câble

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **05.10.2005 EP 05109264**

(43) Veröffentlichungstag der Anmeldung:
**11.04.2007 Patentblatt 2007/15**

(60) Teilanmeldung:
**07122677.3 / 1 901 026**

(73) Patentinhaber: **Komax Holding AG**
**6036 Dierikon (CH)**

(72) Erfinder:
 • **Lurati, Stefan**
 **6221, Rickenbach (CH)**
 • **Häfliger, Benno**
 **6003, Luzern (CH)**

(74) Vertreter: **Gaussmann, Andreas et al**
**Inventio AG**
**Seestrasse 55 Postfach**
**6052 Hergiswil / NW (CH)**

(56) Entgegenhaltungen:
 • **PATENT ABSTRACTS OF JAPAN Bd. 1995, Nr. 11, 26. Dezember 1995 (1995-12-26) & JP 07 227022 A (FUJIKURA LTD), 22. August 1995 (1995-08-22)**
 • **PATENT ABSTRACTS OF JAPAN Bd. 2000, Nr. 15, 6. April 2001 (2001-04-06) & JP 2000 354315 A (ASAHI SEIKI KK), 19. Dezember 2000 (2000-12-19)**
 • **PATENT ABSTRACTS OF JAPAN Bd. 2000, Nr. 01, 31. Januar 2000 (2000-01-31) & JP 11 299036 A (SUMITOMO WIRING SYST LTD), 29. Oktober 1999 (1999-10-29)**
 • **PATENT ABSTRACTS OF JAPAN Bd. 018, Nr. 652 (E-1642), 12. Dezember 1994 (1994-12-12) & JP 06 253430 A (JAPAN AUTOMAT MACH CO LTD), 9. September 1994 (1994-09-09)**

EP 1 772 701 B1

**Beschreibung**

Die Erfindung betrifft eine Einrichtung zur Bestimmung des Leiterdurchmessers eines Kabels mit einem Einkoppler zur Beaufschlagung des Kabels mit einem Signal und einem Auskoppler zur Abtastung des Signals auf dem Kabel und einer Signaleinheit zur Erzeugung des beaufschlagenden Signals und zur Messung des Signals auf dem Kabel, gemäss der Definition des unabhängigen Patentanspruchs.

Aus der Schrift JP 11299036 ist eine Einrichtung zur Bestimmung des Durchmessers des Leiters eines Kabels bekannt geworden. Eine Spule koppelt ein Signal auf das zu bestimmende Kabel ein. Beim Abisoliervorgang des Kabelendes schneiden Abisoliermesser den Mantel des Kabels bis zum Kabelleiter ein und stellen einen elektrischen Kontakt mit dem Kabelleiter her, wobei das eingekoppelte Signal auf die Messer gelangt. Die Messer sind an eine Messeinrichtung angeschlossen, die den Kontakt der Messer mit dem Kabelleiter als Spannungsabfall über einem Widerstand feststellt.

Ein Nachteil der bekannten Einrichtung liegt darin, dass der Messerkopf mit den Abisoliermessern gegenüber einem fixen Potential bzw. Masse isoliert sein muss, damit das auf den Leiter eingekoppelte Signal am Messerkopf bzw. an den Messern abgreifbar ist.

Aus der Schrift JP 07227022 ist eine Einrichtung zur Abtastung des Kabelleiters eines Kabels bekannt geworden mit einem mechanischen Einkoppler zur Beaufschlagung des Kabels mit einem Signal und mit einem berührungslosen Auskoppler zur Abtastung des Signals auf dem Kabel und mit einer Signaleinheit zur Erzeugung des beaufschlagenden Signals auf dem Kabel.

Hier will die Erfindung Abhilfe schaffen. Die Erfindung, wie sie in Anspruch 1 gekennzeichnet ist, löst die Aufgabe, die Nachteile der bekannten Einrichtung zu vermeiden und eine Einrichtung zu schaffen, mittels der der Leiterdurchmesser eines Kabels einfach bestimmbar ist.

Vorteilhafte Weiterbildungen der Erfindung sind in den abhängigen Patentansprüchen angegeben.

Die durch die Erfindung erreichten Vorteile sind im wesentlichen darin zu sehen, dass ein herkömmlicher Messerkopf bzw. ein elektrisch an Masse gelegter Messerkopf verwendet werden kann. Ausserdem muss das Kabelende nicht mit der Masse bzw. einem fixen Potential verbunden werden. Das Kabelende in einem Kabelfass zu finden wäre ohnehin mühsam und zeitraubend. Zur Bestimmung des Leiterdurchmessers muss der Messerkopf nicht umgerüstet werden. Der zur Auskopplung des eingekoppelten Signals notwendige Sensor ist ein elektrisch isoliertes Kabelführungsteil. Das Kabelführungsteil zu isolieren, ist wesentlich einfacher und billiger als den Messerkopf zu isolieren. Ausserdem ist der Sensor auf unterschiedlichen Kabelbearbeitungseinrichtungen verwendbar. Mit der erfindungsgemässen Einrichtung kann die Bestimmung des Leiterdurchmessers automatisiert werden, was wiederum die Einrichtzeit der Kabelbearbeitungseinrichtung wesentlich verkürzt.

Bei der erfindungsgemässen Einrichtung ist zur Abtastung eines Signals auf dem Kabel ein berührungslos arbeitender Auskoppler vorgesehen, wobei das Signal mittels mindestens eines den Kabelleiter kontaktierenden Kontaktelementes veränderbar ist und bei einer Signaländerung die Position des Kontaktelementes erfassbar ist und aus der erfassten Position der Leiterdurchmesser bestimmbar ist.

Anhand der beiliegenden Figuren wird die vorliegende Erfindung näher erläutert.

Es zeigen:

Fig. 1 eine Kabelbearbeitungseinrichtung mit einer Einrichtung zur Bestimmung des Leiterdurchmessers eines Kabels,

Fig. 2 einen Einkoppler zur Beaufschlagung des Kabels mit einem Signal,

Fig. 3 v-förmige Messer zum Einschneiden des Kabelmantels und zur Bestimmung des Leiterdurchmessers des Kabels,

Fig. 4 einen Auskoppler zur Abtastung des Signals auf dem Kabel,

Fig. 5 eine Kabelbearbeitungseinrichtung mit einem Schlitzmesser und

Fig. 6 eine Ausführungsvariante der Signaleinkopplung und der Signalauskopplung.

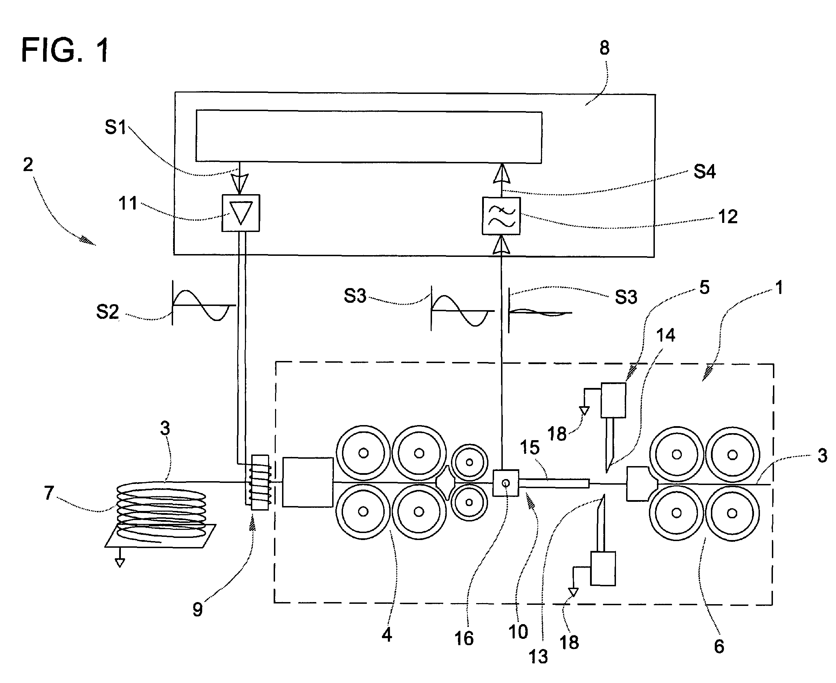

Fig. 1 zeigt eine Kabelbearbeitungseinrichtung 1 mit einer Einrichtung zur Bestimmung des Leiterdurchmessers eines Kabels 3. Die in Fig. 1 gezeigte Kabelbearbeitungseinrichtung 1 besteht beispielsweise aus einer ersten Vorschubeinrichtung 4, einem Messerkopf 5 und aus einer zweiten Vorschubeinrichtung 6. Das Kabel 3 wird mittels der ersten Vorschubeinrichtung 4 von einem Kabelvorrat 7, beispielsweise in einem Fass gelagertes Kabel, abgezogen und je nach gewünschter Kabelabschnittlänge vorgeschoben. Nach dem Durchtrennen des Kabels 3 mittels des Messerkopfes 5 werden die Kabelenden des Kabelabschnittes bearbeitet. (Beispielsweise abisolieren, Tülle aufsetzen, Crimpkontakt anschlagen). Das voreilende Kabelende des Kabels 3 kann auch vor dem Abtrennen des Kabelabschnittes bearbeitet werden. Die zur Bearbeitung der Kabelenden notwendigen Bearbeitungsstationen und Greifer zum Zubringen der Kabelenden sind nicht dargestellt.

Das Kabel 3 besteht üblicherweise aus einem Kabelleiter, der von einem elektrisch isolierenden Mantel umgeben ist. Für die Bearbeitung der Kabelenden ist es unumgänglich, den Kabelleiterdurchmesser zu kennen bzw. zu bestimmen. Vom Kabelleiterdurchmesser abhängig ist beispielsweise die Eindringtiefe der Abisoliermesser, die Wahl des Crimpkontaktes und die Wahl der Tülle, die Zustellung der Crimppresse, etc.

Die in Fig. 1 gezeigte Einrichtung 2 zur Bestimmung des Leiterdurchmessers eines Kabels 3, im weiteren Messeinrichtung 2 genannt, besteht im wesentlichen aus einer Signaleinheit 8, einem Einkoppler 9 und aus einem Auskoppler 10. Die Signaleinheit 8 erzeugt ein Ausgangssignal S1, beispielsweise ein Sinussignal von 40 kHz mit variabler Amplitude (andere Signalformen sind auch möglich), das einem Verstärker 11 zugeführt wird, der das Signal S1 verstärkt und als Ausgangssignal S2 dem Einkoppler 9 zuführt. Mit der Regelung der Signalamplitude am Einkoppler 9 kann sich die Messeinrichtung 2 automatisch an die jeweilige Situation (Kabeltyp, Führungsart des Kabels, Anordnung des Einkopplers bzw. Auskopplers an der Kabelbearbeitungseinrichtung) anpassen. Der Einkoppler 9 überträgt das Ausgangssignal S1 induktiv auf den Kabelleiter. Am einen Ende ist der Kabelvorrat 7 kapazitiv gegen ein fixes Potential bzw. Masse, im weiteren Masse 18 genannt, verbunden, am anderen Kabelende kann mittels des elektrisch isolierten Auskopplers 10 berührungslos, beispielsweise kapazitiv ein Eingangssignal S3 abgetastet werden, das einem Signalaufbereiter 12 zugeführt wird. Das Signal S3 wird gleichgerichtet, gefiltert und verstärkt und als Eingangssignal S4 der Signaleinrichtung 8 zugeführt. Falls das Eingangssignal S3 die notwendige Amplitude nicht erreicht, erzeugt die Signaleinrichtung 8 eine Fehlermeldung. Sobald die an Masse 18 gelegten Messer 13,14 des Messerkopfes 5 den Kabelleiter berühren, nimmt die Amplitude des Eingangssignales S3 ab. Aufgrund der Signaländerung (Amplitudenänderung unabhängig von der Phasenverschiebung des Signals) erkennt die Signaleinrichtung 8, dass die Messer 13,14 den Kabelleiter berühren. Gleichzeitig wird die Zustellung (Eindringtiefe) bzw. die Position der beispielsweise flachen oder v-förmigen Messer 13,14 erfasst und daraus der Durchmesser des Kabelleiters bestimmt.

Anstelle der in das Kabel 3 eindringenden und den Kabelleiter kontaktierenden Messer können als Kontaktelemente beispielsweise auch motorisierte Nadeln vorgesehen sein, deren Eindringtiefe messbar ist und die bis zum Kabelleiter reichen.

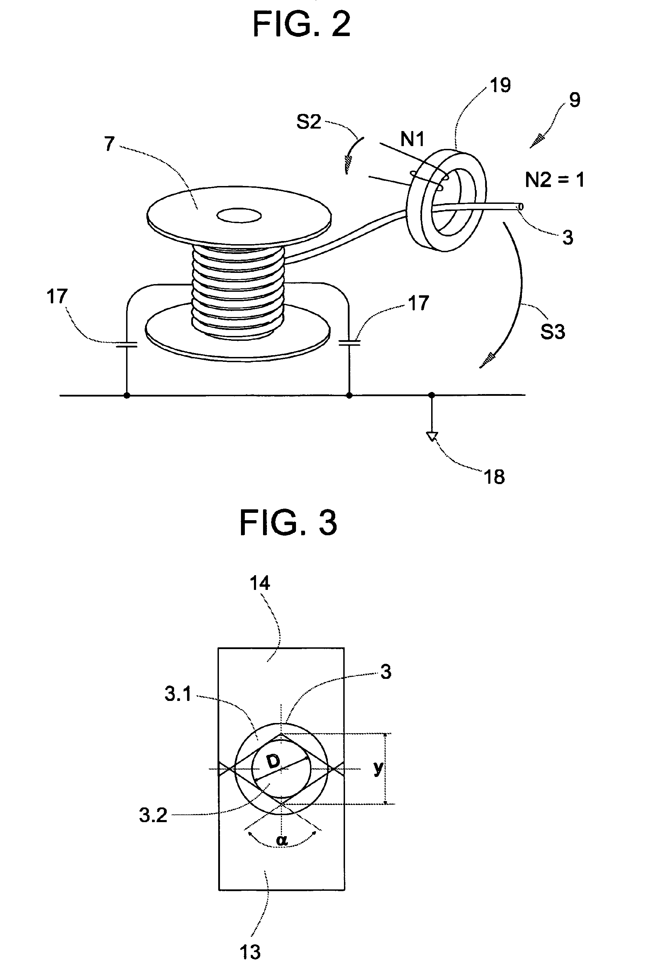

Fig. 2 zeigt den Einkoppler 9 zur Beaufschlagung des Kabels 3 mit dem Signal S2. Der Kabelvorrat 7 ist mittels kapazitiver Verbindung 17 an Masse 18 gelegt. Das Kabel 3 wird durch eine Spule 19 geführt und bildet dabei eine einzelne Sekundärwicklung N2 der auf dem Prinzip des Transformators wirkenden Spule 19 mit einer Primärwicklung N1. Für eine möglichst grosses sekundärseitiges Signal S3, muss das primärseitige Signal S2 möglichst gross sein und das Windungsverhältnis N1/N2 klein sein.

Für Sonderkabel wie beispielsweise Flachkabel kann die Spule 19 anstelle eines Ringkernes einen U-förmigen Kern aufweisen.

Der Auskoppler 10 besteht im wesentlichen aus einer Kabelführung 15, beispielsweise ein Rohr, die elektrisch gegenüber Masse 18 isoliert ist und die als kapazitiver Sensor wirkt bzw. an der ein kapazitiver Sensor angeordnet ist. Das Eingangssignal S3 ist mittels Sensor abtastbar. Die Kabelführung 15 kann um eine Drehachse 16 beweglich angeordnet sein.

Fig. 3 zeigt v-förmige Messer 13,14 zum Einschneiden des Kabelmantels 3.1 und zur Bestimmung des Leiterdurchmessers D des Kabelleiters 3.2. Der Leiterdurchmesser D berechnet sich nach der folgenden Formel:

$$D = y \cdot \sin(\alpha/2)$$

wobei y aus der Messerposition (mittels Drehgeber des Messerantriebes oder mittels Linearmassstab bestimmbar) ableitbar ist und $\alpha$ der Öffnungswinkel des Messers ist. Sobald die Messer 13,14 beim Einschneiden den Kabelleiter 3.2 berühren wird das Signal S3 verändert, was wiederum die Erfassung der momentanen Messerposition y auslöst.

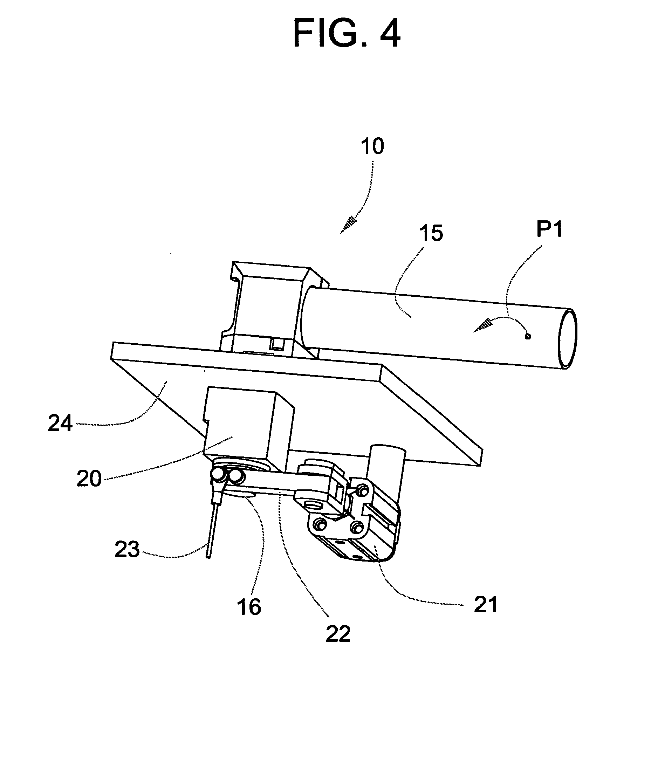

Fig. 4 zeigt den Auskoppler 10 zur Abtastung des Signals S3 auf dem Kabel 3. Die Kabelführung 15 ist an der Drehachse 16 angeordnet, die an einem Lagerblock 20 elektrisch isoliert drehbar gelagert ist. Der Lagerblock 20 wird getragen von einem Gehäuseteil 24. Ein am Gehäuseteil 24 angeordneter Hebelantrieb 21 betätigt einen Hebel 22, der die Drehachse 16 dreht. Mit der Drehung der Drehachse 16 wird die Kabelführung 15 wie mit dem Pfeil P1 symbolisiert aus der Kabellängsachse geschwenkt. Ein das Signal S3 führendes Signalkabel 23 steht in elektrischer Verbindung mit der Kabelführung 15.

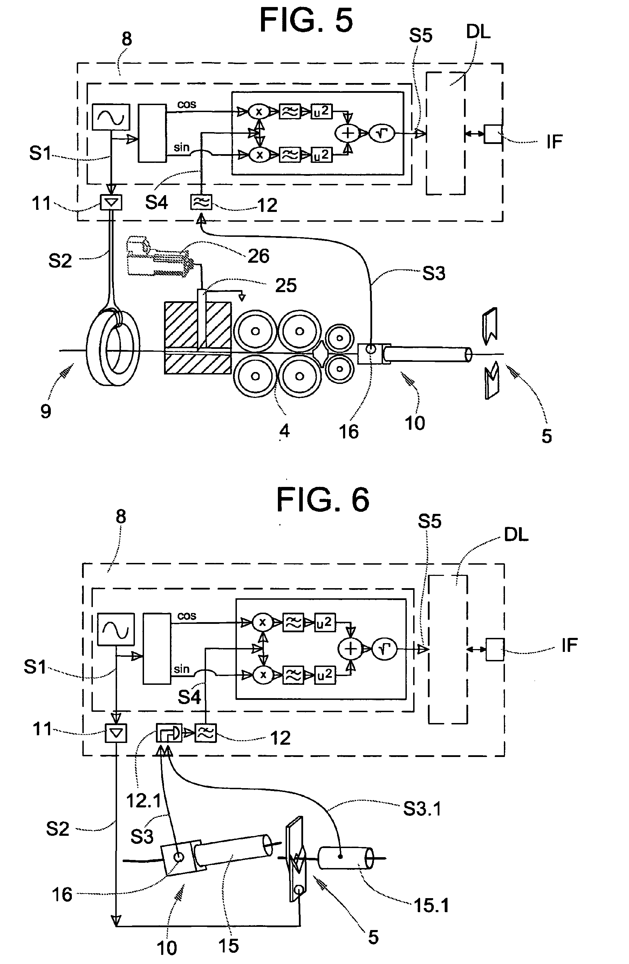

Fig. 5 zeigt eine Kabelbearbeitungseinrichtung 1 mit einem Schlitzmesser 25. Mit dem mittels Messerantrieb 26 zustellbaren Schlitzmesser 25 kann das Kabel 3 in der Kabellängsachse bis auf den Kabelleiter eingeschnitten bzw. geschlitzt werden. Anschliessend wird das Kabel vor und nach dem Schlitz mittels der Messer 13,14 eingeschnitten und die Isolationshülse entfernt. Falls das an Masse 18 gelegte Schlitzmesser 25 den Kabelleiter berührt, nimmt die Amplitude des Eingangssignales S3 des Auskopplers 10 ab. Aufgrund der Signaländerung (Amplitudenänderung unabhängig von der Phasenverschiebung des Signals) erkennt die Signaleinrichtung 8, dass das Schlitzmesser 25 den Kabelleiter berührt. Gleichzeitig wird die Zustellung (Eindringtiefe) bzw. die Position des Schlitzmessers 25 erfasst und daraus der Durchmesser des Kabelleiters bestimmt bzw. die Eindringtiefe beim nächsten Einschnitt verringert.

Fig. 6 zeigt eine Ausführungsvariante der Signaleinkopplung und der Signalauskopplung. Bei dieser Variante kann auch das nacheilende Kabelende bei der Bearbeitung in Sachen Kabeldurchmesser bzw. Eindringtiefe überwacht werden. Die Signaleinkopplung erfolgt direkt über den isolierten Messerkopf 5 mit den Messern 13,14. Die Kabelführung 15 ist aus der Kabeltransportrichtung geschwenkt. Eine weitere Kabelführung 15.1 tastet das Eingangssignal S3.1 kapazitiv ab, wobei das Eingangssignal S3.1 der Vorstufe 12.1 des Signalaufbereiters 12 zugeführt wird.

Fig. 5 und Fig. 6 zeigen Einzelheiten der Signaleinrichtung 8 zur Bewertung des Eingangssignals S4. Das Eingangssignal S4 wird mit zwei um 90° verschobenen und die Frequenz des Signals S2 aufweisenden Signalen sin, cos multipliziert. (Die multiplizierende Einrichtung ist mit x symbolisiert). Mit der Multiplikation wird ein vom Eingangssiganl S4 phasenunabhänginges Signal erzeugt. Mit der Signalmultiplikation entstehen neue unerwünschte Frequenzen, die mittels Filter unterdrückt werden. (Die filternde Einrichtung ist mit $\approx$ symbolisiert). Dann werden die Signale quadriert (die quadrierende Einrichtung ist mit $u^2$ symbolisiert) und anschliessend addiert und aus der Summe die Wurzel gezogen (die addierende Einrichtung ist mit + und die wurzelziehende Einrichtung ist mit $\sqrt{}$ symbolisiert). Das erzeugte Signal S5 ist immer positiv und von Eingagssignal S4 phasenunabhängig. Ein mit DL bezeichneter Auswerter erzeugt aufgrund der Signaländerung des Signals S5 Statussignale wie beispielsweise eine Fehlermeldung "Kabelleiter berührt" und leitet die Statussignale via einer Schnittstelle IF an die Maschinensteuerung weiter.

Der Einkoppler 9 kann als Ausführungsvariante auf dem kapazitiven Prinzip arbeiten und der Auskoppler 10 kann als Ausführungsvariante auf dem induktiven Prinzip arbeiten.

Die Messeinrichtung 2 kann auch zur Abisolierüberwachung verwendet werden. Falls beim Abisolieren die Messer 13,14,25 den Kabelleiter berühren erzeugt der Signalprozessor 8 wie oben erwähnt eine Fehlermeldung.

Im weiteren kann die automatische Bestimmung des Kabelleiterdurchmessers beim Verarbeiten des gleichen Kabeltyps von Zeit zu Zeit oder vor jedem Abisoliervorgang erfolgen. Die Messeinrichtung kennt damit immer den aktuellen Kabelleiterdurchmesser.

**Patentansprüche**

1. Einrichtung zur Bestimmung des Leiterdurchmessers eines Kabels (3) mit einem Einkoppler (9) zur Beaufschlagung des Kabels (3) mit einem Signal (S2) und einem Auskoppler (10) zur Abtastung des Signals (S3) auf dem Kabel (3) und einer Signaleinheit (8) zur Erzeugung des beaufschlagenden Signals (S2) und zur Messung des Signals (S3) auf dem Kabel (3), wobei zur Abtastung des Signals (S3) auf dem Kabel (3) ein berührungslos arbeitender Auskoppler (10) vorgesehen ist wird das Signal (S3) mittels mindestens eines den Kabelleiter kontaktierenden Kontaktelementes (13,14) veränderbar ist **dadurch gekennzeichnet,** **dass** bei einer Signaländerung die Position des Kontaktelementes (13,14) erfasst und aus der erfassten Position der Leiterdurchmesser bestimmt wird.

2. Einrichtung nach Anspruch 1, **dadurch gekennzeichnet,** **dass** der Auskoppler (10) auf dem kapazitiven Prinzip arbeitet.

3. Einrichtung nach einem der Ansprüche 1 oder 2, **dadurch gekennzeichnet,** **dass** die Kontaktelemente (13,14) an ein Potential (18) gelegte Messer eines Messerkopfes einer Kabelbearbeitungseinrichtung (1) sind, die das Kabel (3) beim Einschneiden berühren und das Signal (S3) verändern.

4. Einrichtung nach einem der Ansprüche 1 bis 3, **dadurch gekennzeichnet,** **dass** der Einkoppler (9) eine Spule (19) mit einer Primärwicklung (N1) und einer durch das Kabel (3) gebildeten, einzelnen Sekundärwicklung (N2) ist, wobei das Signal (S2) an der Primärwicklung (N1) einspeisbar ist.

5. Einrichtung nach einem der Ansprüche 1 bis 4, **dadurch gekennzeichnet,** **dass** der Auskoppler (10) eine Kabelführung 15 ist, die elektrisch gegenüber dem Potential (18) isoliert ist und die als kapazitiver Sensor wirkt.

6. Einrichtung nach einem der vorhergehenden Ansprüche, **dadurch gekennzeichnet,** **dass** der Leiterdurchmesser (D) nach der Formel:

$$D = y \cdot \sin(\alpha/2)$$

berechenbar ist, wobei y die Position des Kontaktelementes (13,14) ist, die mittels Drehgeber eines Messerantriebes oder mittels eines Linearmassstabs bestimmbar ist und $\alpha$ der Öffnungswinkel des Kontaktelementes (13,14) ist.

**Claims**

1. Device for determining the diameter of the conductor of a wire (3) with an input coupler (9) to apply a signal (S2) to the wire (3) and an output coupler (10) to sense the signal (S3) on the wire (3) and a signal processor (8) to generate the signal (S2) for application to, and to measure the signal (S3) on, the wire (3), wherein for the purpose of sensing the signal (S3) on the wire (3) a contactlessly functioning output coupler (10) is provided, and the signal (S3) is changeable by means of at least one contact element (13, 14) that contacts the wire conductor, **characterized in that**
on a change in the signal, the position of the contact element (13, 14) is detected and from the detected position the diameter of the wire is determined.

2. Device according to Claim 1, **characterized in that**
the output coupler (10) functions according to the capacitive principle.

3. Device according to one of claims 1 or 2, **characterized in that**
the contact elements (13, 14) are cutters of a cutter head of a wire-processing device (1) to which cutters a potential (18) is applied and which touch the wire (3) and change the signal (S3) when cutting.

4. Device according to one of claims 1 to 3, **characterized in that**
the input coupler (9) is a coil (19) with a primary winding (N1) and a single secondary winding (N2) that is formed by the wire (3), the signal (S2) being feedable to the primary winding (N1).

5. Device according to one of claims 1 to 4, **characterized in that**
the output coupler (10) is a wire guide (15) that is electrically insulated against the potential (18) and acts as a capacitive sensor.

6. Device according to one of the previous claims, **characterized in that**
the diameter of the conductor (D) can be calculated according to the formula

$$D = y \cdot \sin(\alpha/2)$$

where y is the position of the contact element (13, 14), which can be determined by means of a shaft encoder of a cutter drive or by means of a linear scale and $\alpha$ is the angle of opening of the contact element (13, 14).

## Revendications

1. Dispositif pour définir le diamètre de conducteur d'un câble (3), avec un coupleur d'entrée (9) pour appliquer au câble (3) un signal (S2), un coupleur de sortie (10) pour explorer le signal (S3) sur le câble (3), et une unité de signaux (8) pour produire le signal d'application (S2) et pour mesurer le signal (S3) sur le câble (3), étant précisé que pour l'exploration du signal (S3) il est prévu sur le câble (3) un coupleur de sortie (10) qui fonctionne sans contact, et que le signal (S3) est apte à être modifié à l'aide d'au moins un élément de contact (13, 14) qui vient en contact avec le conducteur de câble,
**caractérisé en ce que** lors d'une modification du signal, la position de l'élément de contact (13, 14) est détectée et le diamètre du conducteur est défini à partir de la position détectée.

2. Dispositif selon la revendication 1, **caractérisé en ce que** le coupleur de sortie (10) fonctionne suivant le principe capacitif.

3. Dispositif selon la revendication 1 ou 2, **caractérisé en ce que** les éléments de contact (13, 14) sont constitués par les lames d'une tête porte-lames d'un dispositif de traitement de câble (1) qui sont mises à un potentiel (18), qui touchent le câble (3) lors de l'entaillage et qui modifient le signal (S3).

4. Dispositif selon l'une des revendications 1 à 3, **caractérisé en ce que** le coupleur d'entrée (9) est constitué par une bobine (19) avec un enroulement primaire (N1) et un enroulement secondaire individuel (N2) formé par le câble (3), le signal (S2) étant apte à être introduit au niveau de l'enroulement primaire (N1).

5. Dispositif selon l'une des revendications 1 à 4, **caractérisé en ce que** le coupleur de sortie (10) est constitué par un guidage de câble (15) qui est isolé électriquement par rapport au potentiel (18) et qui agit comme un capteur capacitif.

6. Dispositif selon l'une des revendications précédentes, **caractérisé en ce que** le diamètre de conducteur (D) est apte à être calculé suivant la formule :

$$D = y \cdot \sin(\alpha/2),$$

y désignant la position de l'élément de contact (13, 14), qui peut être définie à l'aide d'un capteur de rotation d'un entraînement de lames ou à l'aide d'un système de mesure linéaire, et $\alpha$ désignant l'angle d'ouverture de l'élément de contact (13, 14).

FIG. 1

EP 1 772 701 B1

# FIG. 2

# FIG. 3

# FIG. 4

# FIG. 5

# FIG. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 11299036 B

- JP 07227022 B